# EUROPÄISCHE PATENTSCHRIFT

(11) **EP 2 150 712 B1**
(45) Veröffentlichungstag und Bekanntmachung des Hinweises auf die Patenterteilung: **17.10.2012**
(21) Anmeldenummer: 08757929.8
(22) Anmeldetag: 12.04.2008
(51) Int. Cl.: F16C 19/50, F16C 33/58, F16D 65/14

(54) **KRAFTÜBERTRAGUNGSEINRICHTUNG FÜR FAHRZEUGBREMSEN**
FORCE TRANSMITTING DEVICE FOR VEHICLE BRAKES
DISPOSITIF DE TRANSFERT DE FORCE POUR FREINS DE VÉHICULE

(30) Priorität: 26.05.2007 DE 102007024787
(43) Veröffentlichungstag der Anmeldung: 10.02.2010
(73) Patentinhaber: BPW Bergische Achsen KG, 51674 Wiehl (DE)
(72) Erfinder: PRINZ, Christian, 53332 Bornheim (DE)
(74) Vertreter: Christophersen, Ulrich Rudolf
(86) Internationale Anmeldenummer: PCT/DE2008/000618
(87) Internationale Veröffentlichungsnummer: WO 2008/145082

(56) Entgegenhaltungen:
- EP-A- 0 539 849
- DE-A1-102005 034 739
- DE-C- 923 760
- US-A- 5 313 916
- US-A- 5 664 646

## Beschreibung

Die vorliegende Erfindung betrifft eine Kraftübertragungseinrichtung für Fahrzeugbremsen mit einem Zuspannhebel und einem Druckstück, die über ein schalenförmiges Lager, dessen innere Lagerschale an dem Zuspannhebel und dessen äußere Lagerschale an dem Druckstück anliegt, miteinander gelenkverbunden sind, wobei ein zwischen den Lagerschalen gebildeter Lagerraum zu beiden Seiten hin durch an den Lagerschalen ausgebildete Ränder vor Verunreinigungen geschützt ist.

Bei solchen Kraftübertragungseinrichtungen wird an dem einen Ende des Zuspannhebels eine Zuspannkraft eingeleitet, die unter einem bestimmten Hebelverhältnis im Bereich des anderen Endes an das Druckstück weitergeleitet wird. Unter dem Einfluss der Zuspannkraft beginnt der Zuspannhebel gegenüber dem Druckstück zu verschwenken, wobei die Schwenkbewegung des Hebels über die Gelenkverbindung in eine im Wesentlichen translatorische Bewegung des Druckstücks überführt wird. An dem über den Zuspannhebel bewegten Druckstück können entsprechend dem Hebelverhältnis erhebliche Kräfte anliegen, die zur Betätigung von Fahrzeugscheibenbremsen nutzbar sind.

Aus der DE 10 2005 034 739 A1 ist eine Kraftübertragungseinrichtung für eine Fahrzeugscheibenbremse bekannt, bei der der Zuspannhebel über ein schalenförmiges Lager mit einem Druckstück gelenkverbunden ist. Das Lager setzt sich zusammen aus einer inneren, am schwenkbaren Zuspannhebel anliegenden Lagerschale und einer gegenüberliegend an dem Druckstück anliegenden Lagerschale. Zwischen den Lagerschalen bzw. deren einander zugewandten Lagerflächen befindet sich ein Lagerraum, in dem eine Vielzahl von Wälzkörpern drehbar untergebracht sind. Seitlich der eigentlichen Lagerflächen sind die Ränder der sich gegenüberliegenden Lagerschalen aufeinander zu abgewinkelt. Dabei umgreifen die Ränder der äußeren, an dem Druckstück liegenden Lagerschale die Ränder der inneren, an dem schwenkbaren Zuspannhebel liegenden Lagerschale, so dass eine Art Labyrinthdichtung entsteht, die den Lagerinnenraum von der Seite her vor Verunreinigungen, Spritzwasser usw. abgeschirmt.

Bei dieser Kraftübertragungseinrichtung hat sich die von den Rändern der Lagerschalen gebildete Labyrinthdichtung als montageunfreundlich erwiesen.

Denn die Ränder der äußeren Lagerschale übergreifen seitlich die Ränder der inneren, im Betrieb gemeinsam mit dem Zuspannhebel schwenkbeweglichen Lagerschale und bilden damit zur Seite hin betrachtet eine seitliche Abschlussfläche des schalenförmigen Lagers. Bei einer solchen Kraftübertragungseinrichtung muss während der Montage des Lagers auf dem Zuspannhebel dafür Sorge getragen werden, dass der Rand der äußeren Lagerschale bzw. die Seitenfläche des Lagers nicht in Kontakt mit dem gegenüber der äußeren Schale schwenkbaren Zuspannhebel gerät, da ansonsten die Lagerschale und der Zuspannhebel im Betrieb gegeneinander schleifen würden, was den einwandfreien Betrieb der Kraftübertragung beeinträchtigen könnte.

Aus der EP 0 539 849 A1 und der DE 923 760 sind schalenförmige Lager bekannt, bei denen die Ränder der inneren Lagerschale die Ränder der äußeren Lagerschale umgreifen, und so das schalenförmige Lager in Achsenlängsrichtung labyrinthartig verschließen.

Der Erfindung liegt die Aufgabe zugrunde, eine Kraftübertragungseinrichtung der eingangs genannten Art montagefreundlicher zu gestalten.

Diese Aufgabe wird erfindungsgemäß gelöst durch eine Kraftübertragungseinrichtung mit den Merkmalen der nebengeordneten Ansprüche 1 und 2.

Eine solche Kraftübertragungseinrichtung erweist sich in der Praxis für den Monteur als montagefreundlich. Denn durch den Umgriff über die Ränder der äußeren Lagerschale bilden die gemeinsam mit dem Zuspannhebel schwenkbeweglichen Ränder der inneren Lagerschale den seitlichen Abschluss des Lagers. Da sich die Ränder der inneren Lagerschale relativ zum Zuspannhebel nicht bewegen, kann es nicht zum Schleifen zwischen der Seitenfläche des Lagers mit Flächen des Zuspannhebels kommen. Für den Monteur ergibt sich damit eine weniger fehleranfällige Montage.

Bei der Ausführungsform nach Anspruch 1 liegt für eine montagefreundliche Ausgestaltung der Rand der inneren Lagerschale an einer Fläche des Zuspannhebels an, oder steht dieser nahe gegenüber. Durch die bündige Anlage des Randes an einer gegenüberliegenden Fläche lässt sich der Rand der inneren Lagerschale zur Ausrichtung bzw. Positionierung des Lagers auf dem Zuspannhebel nutzen.

Bei der Ausführungsform nach Anspruch 2 wird mit dem Ziel eines einfachen Aufbaus die innere Lagerschale über Montageelemente kraft- und/oder formschlüssig an dem Zuspannhebel gehalten, was zu einem einfachen Aufbau führt. Eine Stirnfläche eines der Halteelemente liegt formschlüssig an einer Seitenfläche der Zuspanneinrichtung an, wodurch sich über dieses Element auch eine Lagesicherung zur Seite hin ergibt.

Derartige Elemente können auf einfache Weise durch z.B. Stanzen oder Biegen einstückig an der inneren Lagerschale angeformt werden und erlauben bei einfacher Bauart eine zugleich wenige Handgriffe erfordernde Anbringung an der Zuspanneinrichtung.

Vorgeschlagen wird ferner eine Ausgestaltung, bei der der Zuspannhebel eine quer zur Hebelachse verlaufende Zuspannwelle aufweist, wobei beidseits der Hebelachse jeweils ein Lager auf einer Umfangsfläche der Zuspannwelle angeordnet ist, wodurch sich eine symmetrische Übertragung der Kräfte auf das Druckstück ergibt.

Von Vorteil ist ferner eine Ausgestaltung, bei welcher in dem Lagerraum eine Vielzahl von Wälzkörpern drehbar angeordnet ist, so dass sich die teilweise erheblichen Bremskräfte entsprechend der Anzahl an Lagerkörpern gleichmäßig verteilen. Als Wälzkörper kommen insbesondere Lagerbolzen oder Lagernadeln in Betracht, die von einem Lagerkäfig in üblicher Weise gehalten werden. Daneben sind aber auch beispielsweise Trockengleitlager denkbar.

Schließlich wird vorgeschlagen, dass die äußere Lagerschale nicht nur gegenüber Verdrehen abgestützt, sondern über Halteelemente kraft- und/oder formschlüssig an dem Druckstück gehalten wird. Auch diese Elemente lassen sich beispielsweise durch Stanzen oder Biegen einstückig an der äußeren Lagerschale anformen und erlauben eine Fixierung mit wenigen Handgriffen.

Weitere Einzelheiten und Vorteile der erfindungsgemäßen Kraftübertragungseinrichtung werden nachfolgend anhand eines Ausführungsbeispiels unter Zuhilfenahme der beigefügten Zeichnungen erläutert, in denen
- Figur 1: in einer vereinfachten Schnittdarstellung eine Fahrzeug-Scheibenbremse vom Doppelstempel-Bautyp mit einer Kraftübertragungseinrichtung,
- Figur 2: eine perspektivische Darstellung einer Kraftübertragungseinrichtung,
- Figur 3: eine weitere Ansicht der Kraftübertragungseinrichtung aus Figur 2 von der Hebelseite her betrachtet,
- Figur 4: eine Schnittdarstellung entsprechend der in Figur 3 mit IV-IV bezeichneten Schnittlinie und
- Figur 5: eine Frontalansicht auf die seitlichen Ränder der Lagerschalen aus der in Figur 2 mit V bezeichneten Richtung
zeigt.

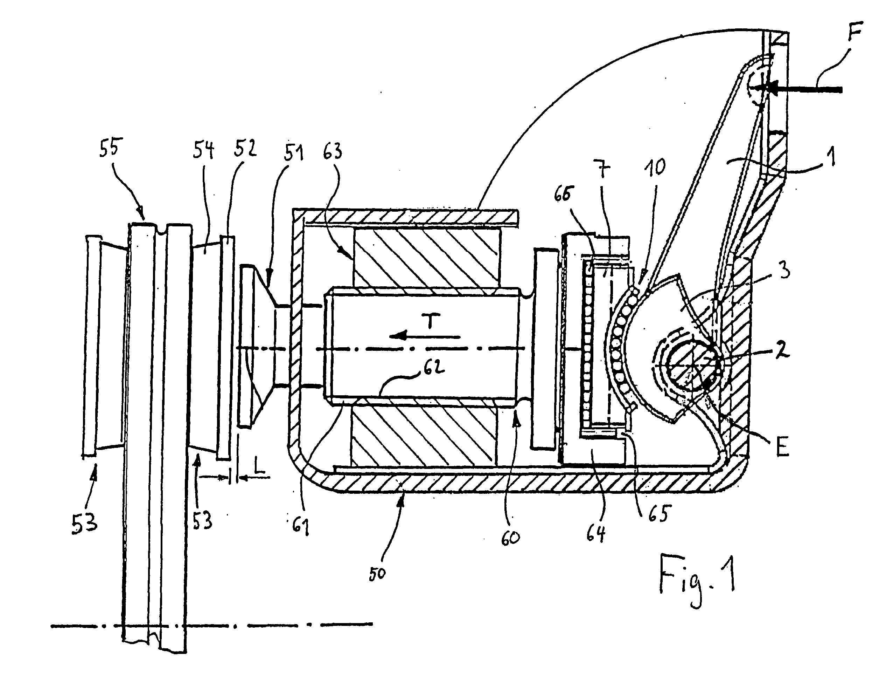

In Figur 1 ist in vereinfachter Übersichtsdarstellung eine Anwendung einer erfindungsgemäßen Kraftübertragseinrichtung für Fahrzeugbremsen dargestellt. Bei der dargestellten Bremse handelt es sich um eine Fahrzeug-Scheibenbremse vom Schwimmsattel-Bautyp, die im rechten Teil des Bremsgehäuses 50 mit einer erfindungsgemäßen Kraftübertragungseinrichtung ausgestattet ist.

In dem Bremsgehäuse 50 der Scheibenbremse sind zwei Druckstempel 51 in Richtung von Bremsbelägen 53 beweglich geführt, die auf beiden Seiten einer gemeinsam mit dem Fahrzeugrad rotierenden Bremsscheibe 55 gegenüberliegend angeordnet sind. Bei Betätigung der Bremse legen sich die Druckstempel 51 nach Überwindung eines voreingestellten Lüftspiels L mit ihrer Stempelplatte gegen die Rückseite einer Belagplatte 52 eines Bremsbelags 53 und drücken dessen Reibbelag 54 gegen die rotierende Bremsscheibe 55. Rückwärtig wird eine Abstützkraft über einen in Figur 1 nicht dargestellten Bremssattel auf den äußeren Bremsbelag 53 übertragen. Durch die sich zwischen den Reibbelägen 54 und der Bremsscheibe 55 einstellende Reibkraft wird das Fahrzeug abgebremst.

Zum Ausgleich des sich im Laufe der Zeit einstellenden Bremsverschleißes ist die Scheibenbremse gemäß der Darstellung in Figur 1 mit einer mechanisch arbeitenden Nachstelleinrichtung versehen. Die Nachstelleinrichtung befindet sich in einem mit einem Außengewinde 61 versehenen Nachstellelement 60. Das Außengewinde 61 greift in ein entsprechendes Innengewinde 62 einer Traverse 63. Die Traverse 63 ist insgesamt nach Art eines Jochs gestaltet, das sich parallel zur Ebene der Bremsscheibe 55 erstreckt. Mittig in der Traverse 63 befindet sich das Innengewinde 62, wobei an den Enden der Traverse 63 jeweils ein Druckstempel 51 starr befestigt ist. Bei der dargestellten Scheibenbremse handelt es sich daher um eine Doppelstempel-Bremse.

Die zwischen der Bremsscheibe 55 und den Bremsbelägen 53 anliegende Reibkraft und damit die Verzögerung des Fahrzeugs ist abhängig von der Zuspannkraft der Druckstempel 51, die von einem außerhalb des Bremsgehäuses 50 angeordneten Bremszylinder mit einer Kraft beaufschlagt werden. Zur Übertragung der von dem Bremszylinder, beispielsweise einem druckluftbetätigtem Bremszylinder erzeugten Zugspannkraft hin zu den Druckstempeln 51 bzw. den Bremsbelägen 53 der Bremse dient die im rechten Teil des Bremsgehäuses 50 dargestellte Kraftübertragungseinrichtung.

Diese besteht aus einem Zuspannhebel 1 und einem Druckstück 7, die über ein schalenförmiges Lager 10 gelenkig gegeneinander abgestützt sind. Am freien Ende des Zuspannhebels 1 ist eine in etwa halbkugelförmige Ausnehmung vorgesehen, in der sich die hier nur anhand der Kraft F symbolisierte Betätigungsstange des Bremszylinders abstützt. Im Bereich seines anderen Endes ist der Zuspannhebel 1 um eine gehäusefest angeordnete Achse E drehbar gegenüber dem Bremsgehäuse 50 abgestützt.

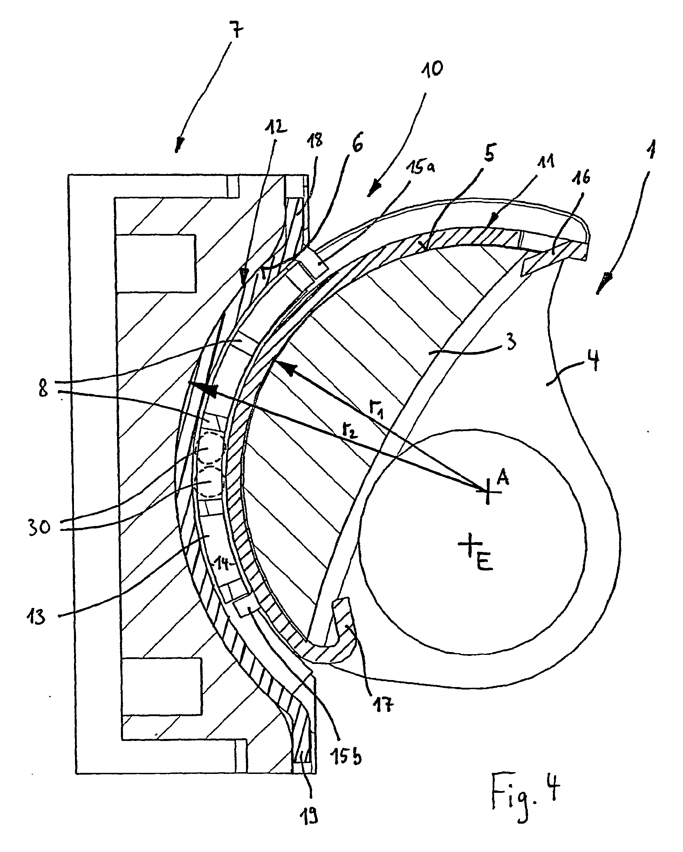

Bei Betätigung des Bremszylinders bewegt sich dessen Betätigungsstange in Richtung der Kraft F, wodurch der Zuspannhebel 1 um die Achse E in Richtung der Bremsscheibe 55 zu kippen beginnt. Diese Schwenkbewegung des Zuspannhebels 1 führt, da das Lager 10 exzentrisch zu der Achse E angeordnet ist, über das Lager 10 zu einem Vortreiben des Druckstücks 7. Zum Ausgleich der genannten Exzentrizität vermag das Druckstück eine Querbewegung durchzuführen. Entsprechend dem Vortrieb des Druckstücks 7 und über weitere im Kraftfluss angeordnete Elemente werden dann die Bremsbeläge 53 gegen die Bremsscheibe 55 gepresst. Beim Ausführungsbeispiel gemäß Fig. 1 befinden sich neben dem Druckstück 7 ein weiteres Druckstück 64, das Nachstellelement 60, die Traverse 63 sowie die Druckstempel 51 im Kraftfluss. Bei dem Druckstück 7 der Kraftübertragungseinrichtung handelt es sich um ein Kulissenelement, das in einer Öffnung 65 des Druckstücks 64 angeordnet ist. Innerhalb dieser Öffnung 65 ist das Druckstück 7 über ein Flachlager 66 quer zur Translationsrichtung T bewegbar gelagert, um eine Exzentrizität zwischen der Drehachse E des Zuspannhebels 1 und dem geometrischen Kreismittelpunkt der Lagerschalen 11, 12 auszugleichen, was nachfolgend anhand von Fig. 4 noch näher zu erläutern sein wird.

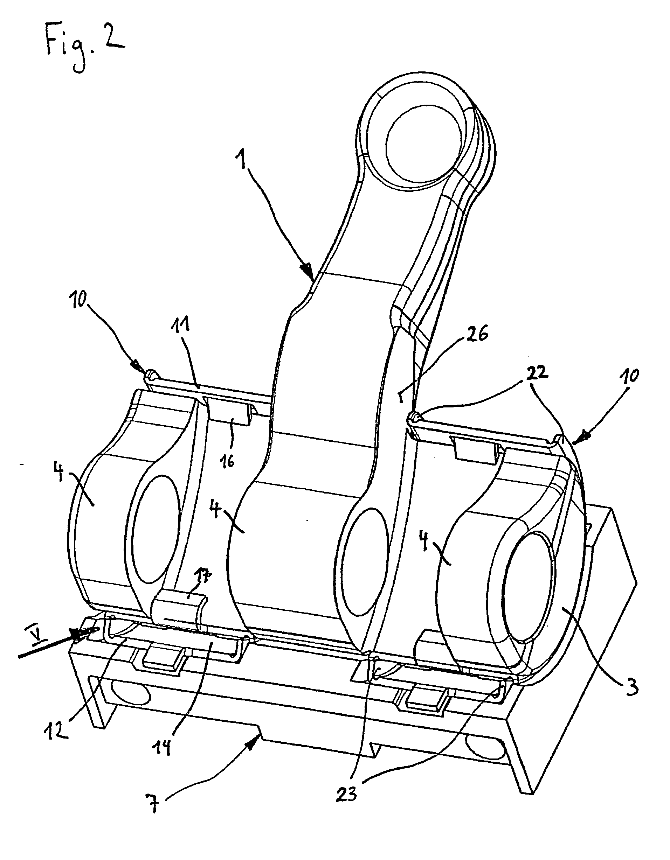

Der Zuspannhebel 1 weist im Bereich seines drehbar gelagerten Endes eine teilzylindrische Zuspannwelle 3 auf, die über rückseitige Aufnahmen 4 zur Durchführung eines Lagerbolzens 2 (vgl. Figur 2) an dem Bremsgehäuse 50 um die Achse E drehbar gelagert ist. Beim Ausführungsbeispiel sind insgesamt drei dieser Aufnahmen 4 gleichmäßig über die Länge der Zuspannwelle 3 verteilt angeordnet.

Wie sich insbesondere der Schmittdarstellung in Figur 4 entnehmen lässt, ist der Zuspannhebel 1 im Bereich der Zuspannwelle 3 und in Richtung des Druckstücks 7 mit einer teilzylindrischen, sich konvex nach außen wölbenden Fläche 5 versehen, die bezogen auf den in Figur 4 mit A bezeichneten Punkt einen Radius r₁ aufweist. Das gegenüberliegend angeordnete Druckstück 7 weist eine entsprechend dimensionierte, konvexe Ausnehmung mit dem Radius r₂ konzentrisch zu dem Punkt A auf. Zwischen den so gebildeten Flächen 5 der Zuspannwelle 3 und 6 des Druckstücks 7 befindet sich das schalenförmige Lager 10.

Wie die Darstellung in Figur 4 erkennen lässt, sind die geometrische Mittelachse A der konvexen Fläche 5 bzw. der konkaven Fläche 6 und damit der Lagermittelpunkt der Schalenlagerung 10 gegenüber der Drehachse E des Zuspannhebels 1 gegeneinander versetzt, womit eine Exzentrizität zwischen der Schwenkachse E und der Lagerachse A besteht. Hierdurch kommt es beim Verschwenken des Zuspannhebels 1 bzw. beim Drehen der Zuspannwelle 3 um die Schwenkachse E zu einer Vorverlagerung der Umfangsfläche 5 in Richtung des Druckstücks 7 und damit zu der gewünschten Translationsbewegung T des Druckstücks 7 in Richtung der Bremsscheibe. Die Größe dieses Vortriebs hängt von dem Achsenversatz, d.h. der Exzentrizität zwischen den Achsen E und A ab.

Damit verbunden ist auch eine gewisse Bewegung des Druckstücks 7 quer zur gewünschten Translationsrichtung T. Zum Ausgleich der resultierenden Querbewegung ist bei der in Figur 1 dargestellten Ausführung das Druckstück 7 als eine querbewegliche Kulisse gestaltet und über ein Flachlager 66 gegenüber dem weiteren Druckstück 64 abgestützt. Eine solche Kulissenbauweise hat sich bei Fahrzeugbremsen durchaus bewährt, jedoch arbeitet der größte Teil der Fahrzeugbremsen ohne eine zwischengeschaltete Kulisse, wobei dann zum Ausgleich der Vertikalbewegungen ein gewisses Verschwenken der Druckstempel beim Betätigen der Bremse in Kauf genommen wird. Auch bei solchen Fahrzeugbremsen ist die erfindungsgemäße Kraftübertragungseinrichtung ohne weiteres einsetzbar.

Für die mit der Erfindung erzielten Montagevorteile ist die Anordnung bzw. Ausgestaltung des teilkreisförmigen Lagers 10 wesentlich, was nachfolgend unter Bezugnahme auf die Figuren 2 bis 5 erläutert wird.

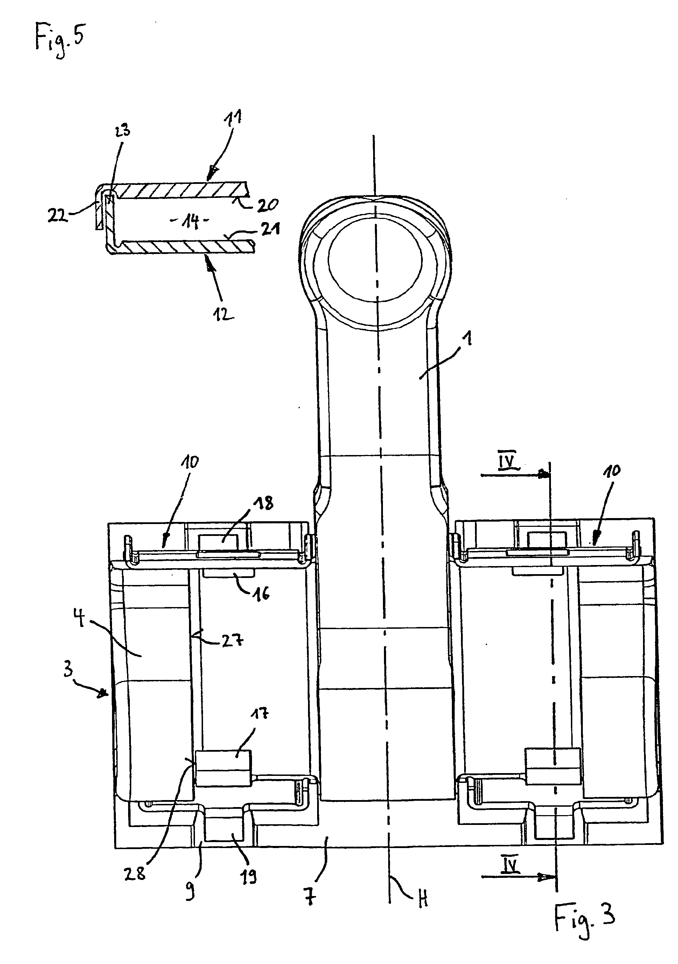

In Figur 5 dargestellt sind die linken Ränder 22, 23 des linken Lagers 10 in einer schematischen Schnittansicht aus der in Figur 2 mit V bezeichneten Richtung. Das Lager 10 ist zusammengesetzt aus einer inneren Lagerschale 11 und einer äußeren Lagerschale 12, die Lagerflächen 20, 21 aufweisen, auf denen die Wälzkörper des Lagers 10 abrollen. Im Bereich zwischen den Lagerflächen befindet sich der eigentliche Lagerraum 14 zur Unterbringung der Wälzkörper. Wie der Darstellung in Figur 5 zu entnehmen ist, sind die Lagerschalen 11, 12 seitlich der Lagerflächen 20, 21 aufeinander zu abgewinkelt, wodurch sich überlappende Ränder 22, 23 entstehen. Die innere Lagerschale 11 ist insgesamt breiter als die äußere Lagerschale 12, so dass der Rand 22 den Rand 23 von der Seite her umgreift. Durch den Überlapp der Ränder 22, 23 wird der Innenraum 14 zur Seite hin nach Art einer Labyrinthdichtung vor Verunreinigungen, etwa Staub, Sand, Spritzwasser usw., abgedichtet.

Das Lager 10 ist gemäß der Darstellung in Figur 4 von insgesamt ringsegmentförmiger Gestalt und weist eine innere Lagerschale 11 auf, die an dem Zuspannhebel 1 bzw. an dessen Zuspannwelle 3 liegt. Die Zuspannwelle 3 weist in Richtung des Druckstücks 7 eine teilzylindrische Außenfläche 5 auf, deren Radius r₁ im Wesentlichen dem Innenradius der inneren Lagerschale 11 entspricht. Die innere Lagerschale 11 ist über einstückig ausgebildete Halteelemente 16 und 17 auf dem Umfang der Welle 3 festgelegt. Bei diesen Halteelementen handelt es sich um ein durch Abwinkeln oder Biegen hergestelltes Element 17 im unteren Bereich der Zuspannwelle 3 sowie ein durch Stanzen und anschließendes Biegen hergestelltes Element 16 im oberen Bereich der Zuspannwelle 3. Die Festlegung des inneren Lagerelements 11 erfolgt dabei so, dass zunächst das federnd gestaltete Element 17 mit der Zuspannwelle 3 in Eingriff gebracht wird und dann das Element 16 auf der gegenüberliegenden Seite der Zuspannwelle 3 verrastet wird. Auf diese Weise lässt sich die innere Lagerschale 11 mit wenigen Handgriffen an dem Zuspannhebel 1 bzw. dessen Zuspannwelle 3 in Umfangsrichtung festlegen, vgl. auch Figur 2.

Hinzu kommt, dass zur seitlichen Positionierung der inneren Lagerschale 11 in Richtung der Achsen A bzw. E der Rand 22 der inneren Lagerschale 11 an einer benachbarten Anschlagfläche 26 des Zuspannhebels 1 in Anlage gebracht werden kann, was eine fehlerunanfällige und positionsgenaue Montage erlaubt. Darüber hinaus kann auch das Montageelement 17 zur Fixierung der Lagerschale 11 beitragen, indem eine Seitenfläche 28 des Halteelements 17 an einer gegenüberliegenden Fläche 27 des Zuspannhebels 1 anliegt, bzw. dieser nahe gegenüber steht. Wenn sowohl der Rand 22 als auch das Montageelement 17 zur axialen Positionierung der inneren Lagerschale 11 beitragen sollen, ist es zur Vermeidung einer Doppelpassung erforderlich, dass entweder der Rand 22 oder das Montageelement 17 nicht direkt an der benachbarten Fläche des Zuspannhebels 1 anliegt, sondern dieser Fläche mit einem gewissen Abstand gegenübersteht. Beim Ausführungsbeispiel (vgl. Fig. 3) steht die Fläche 28 des Montageelements 17 der Fläche 27 mit einem Abstand von wenigen zehntel Millimetern gegenüber. Beim Ausführungsbeispiel handelt es sich bei der Seitenfläche 27 um eine Stirnfläche einer Aufnahme 4 zur Durchführung eines die Achse E (Fig. 1) bildenden Lagerbolzens 2.

Die Position der inneren Schale 11 ist damit zwischen einerseits der Fläche 26 über den Rand 22 und andererseits der Fläche 27 über die Stirnseite 28 des Montageelements 17 in beiden Axialrichtungen der Zuspannwelle 3 gesichert. Für diese Festlegung ist es lediglich erforderlich, die Halteelemente 16, 17 zwischen den Flächen 26 und 27 an der Zuspannwelle 3 zu verrasten. Eine aufwendige Ausrichtung des Lagers 10 gegenüber relativbeweglichen Bauteilen ist nicht erforderlich.

Wie die Darstellung in Figur 3 weiter erkennen lässt, erstreckt sich die Zuspannwelle 3 symmetrisch zu beiden Seiten der Hebelachse H des Zuspannhebels 1. Auf beiden Seiten der Hebelachse H ist jeweils ein Lager 10 zur Gelenkverbindung mit dem Druckstück 7 vorgesehen.

Die äußere Lagerschale 12 liegt in einer Ausnehmung 9 des Druckstücks 7, vgl. Fig. 3. In der Ausnehmung 9 liegt die äußere Lagerschale 12 lose an, d. h. die mechanische Festlegung des Lagers 10 erfolgt nur über die innere Lagerschale 11 am Zuspannhebel 1. Die äußere Lagerschale 12 ist an dem Druckstück 7 nicht festgelegt, sondern lose in dessen Ausnehmung 9 eingesetzt und in Umfangsrichtung über die abgewinkelten Elemente 18, 19 gegen Verdrehen gesichert. Von daher handelt es sich bei der Gelenkverbindung zwischen dem Druckstück 7 und dem Zuspannhebel 1 um eine lose Gelenkverbindung, welche das Druckstück 7 und den Zuspannhebel 1 nicht mechanisch aneinander bindet.

Abweichend zu dem in den Figuren dargestellten Ausführungsbeispiel ist es allerdings auch denkbar, dass die zungenartigen Elemente 18, 19 der äußeren Lagerschale 12 form- und/oder kraftschlüssig in einer entsprechenden Geometrie der Ausnehmung 9 des Druckstücks 7 gehalten werden, wodurch dann über das Lager 10 das Druckstück 7 mechanisch an den Zuspannhebel 1 gekoppelt wäre.

Auch die Elemente 18, 19 können einstückig an der Lagerschale 12 durch z.B. Stanzen und/oder Biegen angeformt werden, vgl. auch Figur 4.

Zwischen den durch die aufeinander zugerichteten Oberflächen der Lagerschalen 11 und 12 gebildeten Lagerflächen 20, 21 befindet sich ein Lagerraum 14, in dem die Lagerelemente untergebracht sind. Bei der Darstellung in Figur 4 sind strichliniert zwei Wälzkörper 30 als Lagerelemente beispielhaft eingezeichnet, die sich zwischen zwei Stegen 8 eines Lagerkäfigs 13 befinden. Die Erfindung ist jedoch keineswegs auf solche Lagerungen mit Lagerkäfigen beschränkt. Vielmehr können verschiedenste Arten von Lagern, so etwa auch Lager ohne Lagerkäfig oder Trockengleitlager, eingesetzt werden. Nach oben und unten begrenzt wird der Lagerraum 14 von einem an der äußeren Lagerschale 12 angeformten Anschlag 15a sowie einem weiteren, an der inneren Lagerschale 11 angeformten Anschlag 15b, zwischen denen der Lagerkäfig 13 gegen Herausrutschen gesichert ist.

Wie sich der Darstellung z.B. in Figur 2 entnehmen lasst, sind die Ränder 22 der inneren Lagerschale 11 weiter voneinander beabstandet als die Ränder 23 der gegenüberliegenden, äußeren Lagerschale 12, so dass die Ränder 22 seitlich einen Umgriff um die Ränder 23 der äußeren Lagerschale 12 bilden. Durch diesen Umgriff wird der Lagerinnenraum 14 nach Art einer Labyrinthdichtung von äußeren Verunreinigungen, etwa Staub oder Ähnlichem, abgeschirmt.

### Bezugszeichen

- 1: Zuspannhebel
- 2: Lagerbolzen
- 3: Zuspannwelle
- 4: Aufnahme
- 5: Fläche, Umfangsfläche
- 6: Fläche
- 7: Druckstück
- 8: Steg
- 9: Ausnehmung
- 10: Lager
- 11: Lagerschale
- 12: Lagerschale
- 13: Lagerkäfig
- 14: Lagerraum
- 15a,b: Anschlag
- 16: Montageelement
- 17: Montageelement
- 18: Element
- 19: Element
- 20: Lagerfläche
- 21: Lagerfläche
- 22: Rand
- 23: Rand
- 26: Seitenfläche, Anschlagfläche
- 27: Seitenfläche
- 28: Seitenfläche, Stirnfläche
- 30: Wälzkörper

- 50: Bremsgehäuse
- 51: Druckstempel
- 52: Belagplatte
- 53: Bremsbelag
- 54: Reibbelag
- 55: Bremsscheibe
- 60: Nachstellelement
- 61: Außengewinde
- 62: Innengewinde
- 63: Traverse
- 64: Druckstück
- 65: Ausnehmung
- 66: Flachlager

- r₁: Radius
- r₂: Radius
- A: Achse
- E: Achse
- F: Kraft
- L: Lüftspiel
- T: Translation
- H: Hebelachse

## Patentansprüche

1. Kraftübertragungseinrichtung für Fahrzeugbremsen mit einem Zuspannhebel (1) und einem Druckstück (7), die über ein schalenförmiges Lager (10), dessen innere Lagerschale (11) an dem Zuspannhebel (1) und dessen äußere Lagerschale (12) an dem Druckstück (7) anliegt, miteinander gelenkverbunden sind, wobei ein zwischen den Lagerschalen (11, 12) gebildeter Lagerraum (14) zu beiden Seiten hin durch an den Lagerschalen (11, 12) ausgebildete Ränder (22, 23) vor Verunreinigungen geschützt ist,
**dadurch gekennzeichnet,**
**dass** die Ränder (22) der inneren Lagerschale (11) die Ränder (23) der äußeren Lagerschale (12) umgreifen, und dass zur axialen Positionierung der inneren Lagerschale (11) ein Rand (22) der inneren Lagerschale (11) an einer benachbarten Fläche (26) des Zuspannhebels (1) anliegt oder dieser nahe gegenüber steht.

2. Kraftübertragungseinrichtung für Fahrzeugbremsen mit einem Zuspannhebel (1) und einem Druckstück (7), die über ein schalenförmiges Lager (10), dessen innere Lagerschale (11) an dem Zuspannhebel (1) und dessen äußere Lagerschale (12) an dem Druckstück (7) anliegt, miteinander gelenkverbunden sind, wobei ein zwischen den Lagerschalen (11, 12) gebildeter Lagerraum (14) zu beiden Seiten hin durch an den Lagerschalen (11, 12) ausgebildete Ränder (22, 23) vor Verunreinigungen geschützt ist, und die innere Lagerschale (11) über Montageelemente (16, 17) kraft- und/oder formschlüssig an dem Zuspannhebel (1) gehalten wird
**dadurch gekennzeichnet,**
**dass** die Ränder (22) der inneren Lagerschale (11) die Ränder (23) der äußeren Lagerschale (12) umgreifen, und dass zur axialen Positionierung der inneren Lagerschale (11) eine Stirnfläche (28) eines der Halteelemente (17) bündig an einer benachbarten Seitenfläche (27) des Zuspannhebels (1) anliegt oder dieser nahe gegenübersteht.

3. Kraftübertragungseinrichtung nach Anspruch 1 und/oder 2, **dadurch gekennzeichnet, dass** der Zuspannhebel (1) eine quer zur Hebelachse (H) verlaufende Zuspannwelle (3) aufweist und dass beidseits der Hebelachse (4) jeweils ein Lager (10) auf einer Umfangsfläche (5) der Zuspannwelle (3) angeordnet ist.

4. Kraftübertragungseinrichtung nach Anspruch 2, **dadurch gekennzeichnet, dass** die Montageelemente (16, 17) einstückig an der inneren Lagerschale (11) angeformt sind.

5. Kraftübertragungseinrichtung nach einem der Ansprüche 1 bis 4, **dadurch gekennzeichnet, dass** in dem Lagerraum (14) eine Vielzahl von Wälzkörpern (30) drehbar angeordnet sind.

6. Kraftübertragungseinrichtung nach einem der vorhergehenden Ansprüche, **dadurch gekennzeichnet, dass** die äußere Lagerschale (12) über Elemente (18, 19) kraft- und/oder formschlüssig an dem Druckstück (7) gehalten wird.

7. Kraftübertragungseinrichtung nach Anspruch 6, **dadurch gekennzeichnet, dass** die Elemente (18, 19) einstückig an der äußeren Lagerschale (12) angeformt sind.

## Claims

1. A force-transmitting device for vehicle brakes, with a tensioning lever (1) and a thrust member (7) which are connected to each other in an articulated manner by way of a shell-shaped bearing (10), the inner bearing shell (11) of which rests against the tensioning lever (1) and the outer bearing shell (12) of which rests against the thrust member (7), wherein a bearing space (14) formed between the bearing shells (11, 12) is protected from dirt on both sides by edges (22, 23) formed on the bearing shells (11, 12), **characterized in that** the edges (22) of the inner bearing shell (11) engage around the edges (23) of the outer bearing shell (12), and, for the axial positioning of the inner bearing shell (11), an edge (22) of the inner bearing shell (11) rests against an adjacent face (26) of the tensioning lever (1) or is closely opposite it.

2. A force-transmitting device for vehicle brakes, with a tensioning lever (1) and a thrust member (7) which are connected to each other in an articulated manner by way of a shell-shaped bearing (10), the inner bearing shell (11) of which rests against the tensioning lever (1) and the outer bearing shell (12) of which rests against the thrust member (7), wherein a bearing space (14) formed between the bearing shells (11, 12) is protected from dirt on both sides by edges (22, 23) formed on the bearing shells (11, 12), and the inner bearing shell (11) is held on the tensioning lever (1) with frictional and/or positive locking by way of mounting elements (16, 17), **characterized in that** the edges (22) of the inner bearing shell (11) engage around the edges (23) of the outer bearing shell (12), and, for the axial positioning of the inner bearing shell (11), an end face (28) of one of the holding elements (17) rests flush against an adjacent face (27) of the tensioning lever (1) or is closely opposite it.

3. A force-transmitting device according to Claim 1 and/or 2, **characterized in that** the tensioning lever (1) has a tensioning shaft (3) extending transversely to the lever axis (H), and a bearing (10) is arranged on a peripheral face (5) of the tensioning shaft (3) on both sides of the lever axis (4) [*sic*] in each case.

4. A force-transmitting device according to Claim 2, **characterized in that** the mounting elements (16, 17) are formed integrally in one piece on the inner bearing shell (11).

5. A force-transmitting device according to any one of Claims 1 to 4, **characterized in that** a plurality of rolling bodies (30) are arranged in a rotatable manner in the bearing space (14).

6. A force-transmitting device according to any one of the preceding Claims, **characterized in that** the outer bearing shell (12) is held on the thrust member (7) with frictional and/or positive locking by way of elements (18, 19).

7. A force-transmitting device according to Claim 6, **characterized in that** the elements (18, 19) are formed integrally in one piece on the outer bearing shell (12).

## Revendications

1. Dispositif de transfert de force pour freins de véhicule comportant un levier d'application du frein (1) et un membre de pression (7) qui sont reliés par une articulation par le biais d'un palier en forme de coque (10) dont la coque de palier interne (11) repose sur le levier d'application du frein (1) et dont la coque de palier externe (12) repose sur le membre de pression (7), sachant qu'un espace de palier (14), formé entre les coques de palier (11, 12), est protégé contre la pénétration de saletés, des deux côtés, par des bords (22, 23) réalisés sur les coques de palier (11, 12), **caractérisé en ce que** les bords (22) de la coque de palier interne (11) entourent les bords (23) de la coque de palier externe (12) et **en ce que**, pour le positionnement axial de la coque de palier interne (11), un bord (22) de la coque de palier interne (11) repose sur une surface adjacente (26) du levier d'application du frein (1) ou fait face à celle-ci à une distance proche.

2. Dispositif de transfert de force pour freins de véhicule comportant un levier d'application du frein (1) et un membre de pression (7) qui sont reliés par une articulation par le biais d'un palier en forme de coque (10) dont la coque de palier interne (11) repose sur le levier d'application du frein (1) et dont la coque de palier externe (12) repose sur le membre de pression (7), sachant qu'un espace de palier (14), formé entre les coques de palier (11, 12), est protégé contre la pénétration de saletés, des deux côtés, par des bords (22, 23) réalisés sur les coques de palier (11, 12) et la coque de palier interne (11) est maintenue par force et/ou par coopération de formes, par le biais d'éléments de montage (16, 17), sur le levier d'application du frein (1), **caractérisé en ce que** les bords (22) de la coque de palier interne (11) entourent les bords (23) de la coque de palier externe (12) et **en ce que**, pour le positionnement axial de la coque de palier interne (11), une surface frontale (28) de l'un des éléments de maintien (17) vient à ras bord d'une surface latérale adjacente (27) du levier d'application du frein (1) ou fait face à celle-ci à une distance proche.

3. Dispositif de transfert de force selon la revendication 1 et/ou 2, **caractérisé en ce que** le levier d'application du frein (1) comporte un arbre d'application du frein (3) s'étendant perpendiculairement à l'axe du levier (H) et **en ce que**, des deux côtés de l'axe du levier (4), on a disposé respectivement un palier (10) sur une surface circonférentielle (5) de l'arbre d'application du frein (3).

4. Dispositif de transfert de force selon la revendication 2, **caractérisé en ce que** les éléments de montage (16, 17) sont formés d'un seul tenant sur la coque de palier interne (11).

5. Dispositif de transfert de force selon l'une quelconque des revendications 1 à 4, **caractérisé en ce qu'**une pluralité d'éléments de roulement (30) est disposée, de manière à pouvoir tourner, dans l'espace de palier (14).

6. Dispositif de transfert de force selon l'une quelconque des revendications précédentes, **caractérisé en ce que** la coque de palier externe (12) est maintenue sur le membre de pression (7) par force et/ou par coopération de formes, par le biais d'éléments (18, 19).

7. Dispositif de transfert de force selon la revendication 6, **caractérisé en ce que** les éléments (18, 19) sont réalisés d'un seul tenant sur la coque de palier externe (12).
